Europäisches Patentamt

European Patent Office

Office européen des brevets

(11) Publication number: **0 188 085**
A2

# (12) EUROPEAN PATENT APPLICATION

(21) Application number: **85308851.6**

(22) Date of filing: **05.12.85**

(51) Int. Cl.⁴: **H 04 B 9/00**

(30) Priority: **09.01.85 GB 8500518**

(43) Date of publication of application:
**23.07.86 Bulletin 86/30**

(84) Designated Contracting States:
**AT BE CH DE FR IT LI LU NL SE**

(71) Applicant: **STC plc**
**190 Strand**
**London, WC2R 1DU(GB)**

(72) Inventor: **Byron, Kevin Christopher**
**8 Jervis Road**
**Bishops Stortford Hertfordshire(GB)**

(74) Representative: **Capsey, Sydney Ross et al,**
**Standard Telephones and Cables Patent Department**
**Edinburgh Way**
**Harlow Essex CM20 2SH(GB)**

(54) Optical fibre transmission systems.

(57) An optical fibre (3) which radiates power along its length extends in an overhead path in an office or control room. Information coupled into one end of the fibre from a main frame computer (1), for example, is radiated into free space within the office or control room, and can be received by mobile (2,2¹) and other terminals (4,5,6) therewithin via detectors mounted on the terminals, provided the terminals are within range of the fibre. Non-passive terminals (4,5,6) may communicate with one another, passive terminals (2,2¹) or the main frame computer (1) via the radiating fibre (3) if they are connected by optical links and bi-directional couplers to the radiating fibre (3). Various suitable designs of leaky optical fibre (3) are described.

EP 0 188 085 A2

Croydon Printing Company Ltd.

0188085

K.C. Byron - 13

## OPTICAL FIBRE TRANSMISSION SYSTEMS

This invention relates to optical fibre transmission systems.

According to the present invention there is provided an optical fibre transmission system characterised by an optical fibre which radiates power along its length, means for coupling information to be transmitted into the fibre and means for detecting the information as radiated from the fibre.

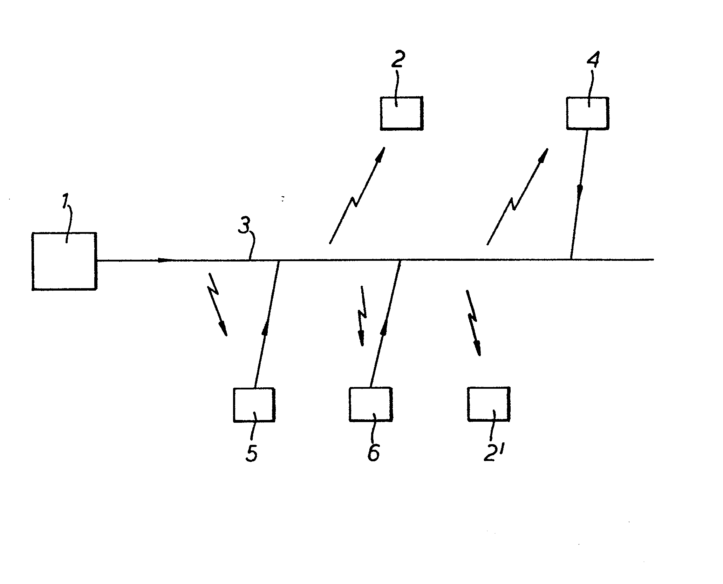

Embodiments of the invention will now be described with reference to the accompanying drawing which shows a local area network schematically.

An optical fibre which radiates power, rather than transmits it along its length, can provide a transmission medium for communication from a fixed point to a receiver which may be disposed anywhere within a certain radial distance from the fibre. For example in a large office or control room the transmission of information from a main computer or word processor etc. can be picked up at a mobile terminal such as 2 or $2^1$ positioned anywhere in the office from an overhead radiating optical fibre 3. For passive mobile terminals such as printers or TV monitors, therefore, a fixed connection by an electrical cable link or via an optical fibre link between the computer and the terminal is not required, whilst data can still be transmitted at a high bit rate. The optical fibre 3 required to achieve this is a leaky optical fibre in which information transmitted along the fibre is radiated outwards from the fibre core into free space throughout the length of the fibre. The radiated information can be detected by means of a photodiode or photodiode array. In local area networks, as illustrated in the drawing, this reduces the hitherto bulky multiway connections from machine to machine. Machines such as telephones, personal computers 4, 5 and 6 therefore require only one connection per machine to the fibre via respective bi-directional couplers, all received signals from other machines are through free space from the leaky fibre as indicated in the drawing.

The leaky optical fibre may have various forms. It may be a single mode fibre operating at a V value below 1.5, in which case 50% of the power is in the cladding. Alternatively, it may be of a design having controlled leaky mode properties, for example a deeply depressed fibre. A further possibility is to make use of the Raman effect in fibres, in which case the leaky radiation is at the first Stokes shift away from the transmitted wavelength. In this case the fibre is designed to be above the cut-off wavelength from the transmitted signal into the fibre core but below the cut-off for the Raman shifted wavelength of the core material. Considering a step index single mode fibre with a core diameter of 5.1µm, ($\Delta$n = 5 x $10^{-3}$) operating at 1.3µm with a V value of 1.5 and with a pump and signal wavelength separation of 60nm, the change in transmitted power (excluding scattering, absorption etc) for the first Stokes shift will be 5%, which power will be radiated into free-space.

If the leaky fibre can transmit several wavelength simultaneously (a multiplexed radiating fibre) and particular wavelengths are leaky only within a certain range of the fibre length then particular areas of an office may be in receipt of information only of interest to that area.

0188085

CLAIMS:-

1. An optical fibre transmission system characterised by an optical fibre (3) which radiates power along its length, means for coupling information (1) to be transmitted into the fibre (2) and means for detecting $(2,2^1)$ the information as radiated from the fibre (3).

2. An optical fibre transmission system as claimed in claim 1 and for transmitting information in an office, or control room, from a main computer (1), characterised in that the main computer (1) is coupled to the optical fibre and in that the detecting means $(2,2^1)$ is disposed on mobile or fixed terminals located within the office, or control room, and within a predetermined radial distance from the fibre (3).

3. An optical fibre transmission system as claimed in claim 2 characterised in that other terminals (4,5,6) within the office, or control room, receive information as radiated by the optical fibre (3) and are coupled to the optical fibre (3) via respective optical fibre links and bi-directional couplers whereby to supply information to one another (4,5,6), passive mobile terminals $(2,2^1)$ or the main computer (1).

4. An optical fibre transmission system as claimed in any one of claims 1 to 3, characterised in that the radiating optical fibre (3) comprises a single mode fibre operating at a V value below 1.5.

5. An optical fibre transmission system as claimed in any one of claims 1 to 3, characterised in that the radiating optical fibre (3) comprises a deeply depressed fibre.

6. An optical fibre transmission system as claimed in any one of claims 1 to 3, characterised in that the radiating optical fibre (3) is a single mode fibre operating at a V value of 1.5 or below and optically pumped whereby to achieve leaky radiation at the first Stokes shift away from the transmitted wavelength.

0188085

K.C. BYRON -13